# EUROPEAN PATENT APPLICATION

(11) **EP 4 744 775 A1**
(43) Date of publication of application: **20.05.2026**
(21) Application number: 24212790.0
(22) Date of filing: 13.11.2024
(51) Int. Cl.: B01L 3/02

(54) **DROPLET GENERATION DEVICE FOR A MOVING SUBSTRATE**

(71) Applicant: Nederlandse Organisatie voor toegepast- natuurwetenschappelijk onderzoek TNO, 2595 DA 's-Gravenhage (NL)
(72) Inventor: Ochsendorf, Rafael, 2595 DA 's-Gravenhage (NL); Sandman, Hugo, 2595 DA 's-Gravenhage (NL); Van Duijn, Esther, 2595 DA 's-Gravenhage (NL); Vaes, Wouter Henricus Johannes, 2595 DA 's-Gravenhage (NL); Braakman, René Bertil Henri, 2595 DA 's-Gravenhage (NL)
(74) Representative: V.O.

(57) **Abstract**

Droplet deposition device comprising:
- a substrate driving arrangement arranged to drive a substrate in a drive direction;
- a substrate provided on the substrate driving arrangement;
- a liquid dispenser arranged to provide liquid on the substrate;
- a dispensing actuator arranged to control a gap distance in a dispensing direction between the liquid dispenser and the substrate;
- wherein a transfer distance is defined as a gap distance in which the liquid provided by the liquid dispenser adheres to the substrate;
- wherein the liquid dispenser comprises a first material and the substrate comprises a second material such that when the liquid dispenser is brought at the transfer distance from the substrate, the substrate has higher adhesion forces acting on the liquid than the liquid dispenser and the liquid present in the liquid dispenser is transferred to the substrate.

## Description

The invention relates to a droplet deposition device, a droplet analysis arrangement and a method of forming a droplet on a moving substrate, e.g. a moving wire.

Droplet generators are devices designed to produce and control the formation of droplets from a liquid. Said devices are an important aspect in applications requiring precise droplet size, uniformity and distribution. For example, in inkjet printing droplet generators produce fine droplets for accurate image and text reproduction. In the medical / pharmaceutical industries and research, a droplet generator may be used for conducting laboratory diagnostics.

Droplet generators may be combined with a moving substrate. Using a moving substrate, e.g. a moving wire, results in enhanced precision in material deposition. The moving substrate provides a dynamic surface that ensures uniform coverage, precise patterning and continuous production. Therefore, such a system may be particularly beneficial in the field of thin-film coating, microprinting, controlled material deposition and. when used for conducting laboratory diagnostics.

A particular application of a droplet generator is the use of the generator to apply a droplet of a liquid sample on a substrate. Next, the liquid sample on the substrate may be combusted and analyzed using an isotope-ratio mass spectrometry method. For example, the droplet of a liquid sample may be applied to a moving wire, which moving wire is part of, or connect to, an Isotope ratio mass spectrometer system, e.g. an Accelerator Mass Spectrometer (AMS) system. A droplet of the liquid sample is applied to a wire, said wire is then moved into a drying chamber before entering a combustion chamber. The liquid sample is combusted and the remaining sample subsequently is measured with AMS. A requirement of moving-wire AMS technology is that droplets should be deposited at regular intervals of the moving wire, and that the droplets need to have a uniform small droplet size. One way of addressing this challenge is by making use of an indented wire, i.e. a wire having indentations at regular intervals, at which indentation the droplet is deposited. The indentations prevent droplets from sliding along the wire, and droplets combining and falling off the wire. Another way of providing droplets on a wire is by using a syringe pump. Said syringe pump deposits a discrete drop directly onto the moving wire.

A disadvantage of the syringe pump system is that the provided droplets are relatively large and may cause partial splashing when the droplet lands on the wire. As a result, the droplet provided on the wire may vary in size. An increase of volume may cause peak broadening or a loss of resolution, which negatively impacts the analytical performance of the system. The indented wire partially mitigates this, however the changes in surface of the wire cause it to be more prone to breaking.

The invention aims to counteract the above disadvantages, preferably while retaining the advantages. More specifically, the invention aims to provide for a device that provides droplets on a substrate with regular intervals and reproducible volume per droplet. In addition, the device, including the substrate, aims to be reliable and thereby decrease the cost of operation.

Therefore, the invention provides for a droplet deposition device, in particular a droplet deposition device according to claim 1. The droplet deposition device comprises a substrate driving arrangement arranged to drive a substrate in a drive direction and a substrate provided on the substrate driving arrangement. The substrate driving arrangement can be actuator-based such that the substrate driven by the driving arrangement can be moved with high precision relative in at least one degree of freedom, e.g. in a horizontal direction, two degrees of freedom, e.g. in a plane, or three degrees of freedom. Optionally, the substrate driving arrangement is arranged such that an endless loop is formed. For example, the driving arrangement may be provided such that the substrate follows a circular or ellipsoid path in a plane. In this example, the substrate is driven either clockwise or counterclockwise during use.

Furthermore, the droplet deposition device comprises a liquid dispenser arranged to provide liquid on the substrate and a dispensing actuator arranged to control a gap distance in a dispensing direction between the liquid dispenser and the substrate. The liquid dispenser can comprise a needle or a capillary that has a partially hollow interior that is in liquid communication with a flow inlet and a flow outlet. The hollow interior can have a diameter such that capillary forces act upon the fluid present in the hollow interior. The capillary forces causes the liquid to remain attached to the hollow interior. A pump may be used to transport the liquid from the flow inlet towards the flow outlet. Said flow outlet can be provided at a tip of the needle towards the substrate. When the fluid is transported towards the tip of the needle, a droplet is formed outside of the hollow interior of the needle. If the droplet is at a sufficiently large gap distance from the substrate, the droplet will remain adhered to the needle.

The gap distance, i.e. the distance between the liquid dispenser and the substrate, is controlled by the dispensing actuator. In the embodiment wherein the liquid dispenser is a needle the gap distance is between the tip of the needle at the side of the flow outlet and the substrate. The dispensing actuator is arranged to alternate the gap distance between the liquid dispenser and the substrate such that the liquid dispenser can be brought at least close enough to reach the transfer distance. The transfer distance is, or defined as, a gap distance in which the liquid provided by the liquid dispenser adheres to the substrate. Thus, the dispensing actuator can controllably adjust the gap distance by moving the liquid dispenser. When the liquid dispenser is sufficiently close to the substrate, and the gap distance is equal to or smaller than the transfer distance, the liquid from the liquid dispenser adheres to the substrate. The liquid dispenser can also be brought to a gap distance larger than the transfer distance, e.g. a multitude of the transfer distance such as at least one and a half, twice or triple the transfer distance. In a preferred embodiment, the dispensing actuator moves the liquid dispenser towards the substrate to a distance equal or smaller than the transfer distance, and moves liquid dispenser away after a droplet has been formed on the substrate. After the fluid at least adheres to both the substrate and the liquid dispenser, or adheres to the substrate only, the liquid dispenser moves away, to a gap distance larger than the transfer distance. The size of the droplet may be influenced by the time the liquid dispenser has a gap distance that is smaller or equal than the transfer distance. In case a relatively large droplet is preferred, the liquid dispenser has a gap distance smaller or equal than the transfer distance for a larger amount of time than when a smaller droplet is preferred. The liquid dispenser may then be moved towards the transfer distance such that a next droplet may be provided on the substrate. This back-and-forth motion, during which one droplet is provided on the substrate, is preferably repeated with a constant speed and at a constant frequency. Since the substrate is driven in a direction that is different than the transfer direction droplets are formed at the same distance from each other on the substrate.

The liquid dispenser comprises a first material and the substrate comprises a second material such that when the liquid dispenser is brought at the transfer distance from the substrate, the substrate has higher adhesion forces acting on the liquid than the liquid dispenser and the liquid present in the liquid dispenser is transferred to the substrate. In the context of the invention, adhesion forces should be understood as all forces acting on the liquid that may facilitate adhesion of said liquid to either the liquid dispenser and the substrate. Primarily, this should be understood as the adhesive properties of the materials, that may be supported by auxiliary adhesive forces, e.g. gravity acting upon the liquid or electrically charging the liquid dispenser or the surface. In an example, this may be achieved by having a second material that has a higher adhesion towards the liquid than the first material. The different adhesive properties of the two materials, e.g. one material being more hydrophilic than the other, facilitates the transfer of the liquid from the liquid dispenser towards the substrate. The material of the liquid dispenser that comes in to contact with the fluid may be made of a material that has a hydrophobic characteristic than the substrate for the used liquid. Thus, when the liquid dispenser is brought to the transfer distance the adhesive forces acting on the fluid by the substrate are larger than the adhesive forces acting on the liquid. As a result, the liquid is transferred from the liquid dispenser to the substrate and a droplet is formed. Using two types of materials, having hydrophobic / hydrophilic characteristics respectively relative to each other for the liquid used, allows for a controllable deposition of material that is the same during each discharge. Preferably, the liquid dispenser is brought at a gap distance equal or smaller than the transfer distance for a predetermined amount of time for each back-and-forth motion allows for accurate control of how the size of the liquid formed on the substrate. Thus, the two different materials allow for accurate droplet formation on the substrate by controlling the speed of the substrate in the drive direction and by controlling the movement of the liquid dispenser in the dispensing direction.

The first material can be silica, preferably synthetic fused silica, and / or the second material can be metal. Synthetic fused silica can be coated in a material such as polyimide. The metal can have a more hydrophilic character than silica for the used liquid, preferably a more hydrophilic character than synthetic fused silica for the used liquid in order to allow the transfer of the fluid from the liquid dispenser towards the substrate. The first materials can however be any type of material that has hydrophobic characteristics for the used liquid such as various plastics (PTFE, PP, PDMS, PS etc.). Alternatively, the surface of the liquid dispenser that comes in to contact with the liquid, e.g. the wall of the needle such as the outer wall and the inner wall of the needle, may be coated with a material that is hydrophobic for the used liquid such as wax or PTFE. It is however important that the adhesive properties of the liquid dispenser are higher than that of forces acting upon the liquid when the liquid dispenser is at a distance larger than the transfer distance. For example, the fluid in the liquid dispenser needs to remain attached to the liquid dispenser at a relatively large gap distance and thus should resist the effects of gravity. This may be achieved by material choice, or by providing a liquid dispenser in which additional forces assist with adhering the liquid to the liquid dispenser, e.g. capillary forces. Conversely, the forces acting upon the liquid and causing it to adhere to the liquid dispenser should be smaller than the adhesive forces acting upon the liquid when the liquid dispenser is brought to a gap distance that is smaller or equal than the transfer distance.

The transfer distance can be zero or larger than zero. Preferably, the gap distance remains larger than zero during use. In other words, liquid dispenser can be arranged to prevent coming into physical contact with the substrate. By preventing contact between the liquid dispenser and the substrate vibrations in the substrate may be reduced and the droplets provided on the substrate may be more consistent in volume and shape. If the liquid dispenser were to come in to contact with the substrate during the back-and-forth movement, even incidentally, a vibration would be introduced in the substrate which may negatively affect the consistency between droplets on the substrate and therefore also, for example, a droplet analyzer provided downstream of the liquid dispenser.

The liquid dispenser can comprise a hollow interior that defines an internal volume. The internal volume can be less than 50 µl, preferably less than 15 µl, more preferably less than 10 µl, even more preferably less than 1 µl. Having a relatively small internal volume may prevent mixing and / or dispersion of the liquid. This may be advantageous for more accurate measurement results as the accuracy of spotting, i.e. the precise deposition of a droplet on the substrate, is improved and the total measurement error can be reduced.

The substrate can be a wire having a longitudinal axis that coincides with the drive direction. The wire can have a constant diameter, preferably a constant diameter of 250 µm. Using a wire as a substrate may be advantageous as the wire may be accurately controlled, e.g. driven, by the substrate driving arrangement. Thus, droplets may be provided more evenly spaced on the wire and may be supplied to a further analysis device such as an AMS. Additionally, using a wire may reduce contamination as the contact with external surfaces can be minimized.

The dispensing actuator can comprise a linear electromagnetic actuator. The linear electromagnetic actuator may comprise a coil assembly and a moving element arranged within a magnetic field provided by the coil assembly during use. The magnetic field may generate a magnetic force on the moving element that causes a linear motion. A linear electromagnetic actuator may allow for precise control over the position and velocity of the liquid dispenser, in particular control over the gap distance.

In addition, the invention provides for a droplet analysis arrangement comprising a droplet deposition device as previously described, wherein the liquid dispenser is provided at one end of the substrate. The droplet analysis arrangement further comprises a liquid supplier provided upstream and in liquid communication with the droplet deposition device. The liquid supplier is arranged to provide liquid, e.g. a sample or a specimen suspended in liquid, to the liquid dispenser. Additionally, a droplet analyzer is provided downstream of the liquid dispenser and at an opposite end of the substrate. Thus, a fluid can be provided to the droplet deposition device, e.g. a fluid sample, from the liquid supplier. Such a liquid supplier may be a container with a liquid to be analyzed that was prepared remotely, i.e. at a different location than the droplet deposition device, or that was prepared locally. Such liquid may be provided to the droplet deposition device by an auxiliary pump. If the fluid sample is provided locally, the liquid supplier can be a liquid chromatography system. Droplets provided by the liquid chromatography system may be deposited on the substrate and thus may be analyzed droplet by droplet by the droplet analyzer. The droplet deposition device allows for providing evenly sized and shaped droplets on the substrate, i.e. improving the accuracy of spotting, and thereby reducing the total measurement error of the droplet analyzer. In a particular embodiment, the droplet analyzer can be an isotope ratio mass spectrometer. Using a droplet deposition device as previously described is particularly advantageous for an isotope ratio mass spectrometer, as relatively small droplets can be provided that have the same volume and shape to get the most accurate results. The droplet analysis arrangement can further comprise a first heater provided between the liquid dispenser and the droplet analyzer. The first heater can be arranged to dry the droplet provided on the substrate such that only a solid sample remains, and the liquid is evaporated. The solid sample may be fed to a second heater provided between the first heater and the droplet analyzer, wherein the second heater can be arranged to combust the dried sample such that the sample is transformed into a gaseous phase, which may be introduced into a droplet analyzer.

In a second aspect of the invention, a method for forming a droplet on a moving substrate using a droplet deposition device is provided. The method comprises the steps of:
- providing a droplet deposition device, preferably the droplet deposition device previously disclosed, comprising a liquid dispenser and a moving substrate;
- providing a liquid in or on a liquid dispenser;
- moving the liquid dispenser to a transfer distance such that the liquid transfers from the liquid dispenser to the moving substrate; and
- retracting the liquid dispenser such that a gap distance between the liquid dispenser and the moving substrate is larger than the transfer distance.

Further advantageous aspects of the invention are set out in the description and appended claims.

The technical features described in the paragraphs and sentences above can be isolated from the context, and the isolated technical features from the different paragraphs and sentences can be combined. Such combinations are herewith specifically disclosed in this description.

The invention will further be elucidated on the basis of exemplary embodiments which are represented in the drawings. The exemplary embodiments are given by way of non-limitative illustration of the invention.

In the drawings:
Fig. 1 shows a schematic side view of an example of a droplet deposition device according to the invention;
Fig. 2 shows a schematic cross-sectional side view of an example of a part of a liquid dispenser of a droplet deposition device according to the invention;
Fig. 3 shows a schematic side view of a droplet analysis arrangement according to an example of the invention; and
Fig. 4A-4D show photo-images of the droplets being formed on a substrate according to an example of the invention.

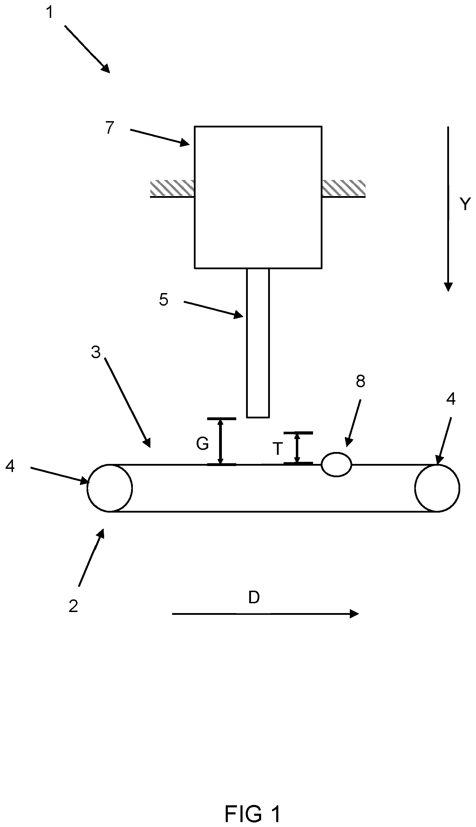

An example of a droplet deposition device 1 is shown in Fig. 1. In the depicted schematic side view, the droplet deposition device 1 comprises a substrate driving arrangement 2 arranged to drive a substrate 3 in a drive direction D. A substrate 3 has been provided on the substrate driving arrangement 2. In the shown example, the substrate 3 is a wire 3 having a longitudinal axis that is parallel to the drive direction D. The wire 3 has a constant diameter, in the shown example the constant diameter is 250 µm. In the shown example, the wire driving arrangement 2 comprises two axles 4 of which at least one axle 4 is driven by a motor (not depicted). The wire 3 is tensioned by the axles 4, such that if the motor drives at least one axle 4 the part of the wire 3 closest to a liquid dispenser 5 is transported in the drive direction D. The part of the wire 3 furthest away from the liquid dispenser 5 moves in the opposite direction of the drive direction D and forming an endless loop. It will be cleared to the skilled person, that the endless loop can be provided in any orientation with respect to the liquid dispenser 5 as long as the liquid dispenser 5 is able to transfer the liquid from the liquid dispenser 5 to the substrate 3.

The liquid dispenser 5 is arranged to provide liquid 6 on the substrate 3, i.e. the wire 3. A dispensing actuator 7 is arranged to control a gap distance G in a dispensing direction Y between the liquid dispenser 5 and the wire 3. In the shown example, the dispensing actuator 7 is connected to a frame, depicted schematically by the dashed gray lines. In the shown example, the dispensing direction Y and the drive direction D are transversal with respect to each other but it will be clear to the skilled person that the angle between the dispensing direction Y and the drive direction D can be any angle, as long as it allows for the accurate transfer of liquid 6 from the liquid dispenser 5 to the substrate 3. As an example, shown in Fig. 1, the dispensing actuator 7 comprises a linear electromagnetic actuator to control the gap distance G between the liquid dispenser 5 and the substrate 3.

The transfer of the liquid 6 happens once the gap distance is at most equal to the transfer distance T. The transfer distance T is defined as a gap distance G in which the liquid provided by the liquid dispenser adheres to the substrate 3, e.g. the wire 3. Specifically, the transfer distance T is larger than zero, i.e. the liquid dispenser 5 does not come in to direct physical contact with the substrate 3 when the liquid is transferred. Preferably, the gap distance Gand the transfer distance T, is always larger than zero during use so no vibrations are introduced due to physical contact between the droplet dispenser 5 and the substrate 3. The transfer of the liquid 6 at the transfer distance T is facilitated by the materials that are hydrophilic / hydrophobic for the used liquid present on the substrate 3 and the liquid dispenser 5 respectively. The liquid dispenser 5 comprises a first material, while the substrate 3 is at least partially made of a second material. The second material has a higher adhesion towards the liquid 6 than the first material. In other words, the second material has a more hydrophilic character than the first material or the first material has a more hydrophobic character than the second material for the used liquid. Thus, when the liquid dispenser 5 is brought at the transfer distance T from the wire 3 the liquid 6 present in the liquid dispenser 5 is transferred to the wire 3. In the shown example, the first material is synthetic fused silica coated with polyimide, and the second material is metal. It will be understood by the skilled person that the adhesive forces acting upon the liquid 6 may not only depend on the adhesive properties of the first and / or second material but may also be enhanced by electrically charging the liquid dispenser 5, in particular the needle 13 of the liquid dispenser, or by angling the liquid dispenser 5 such that gravitational forces facilitate adhesion to the liquid dispenser 5 and / or the substrate 3.

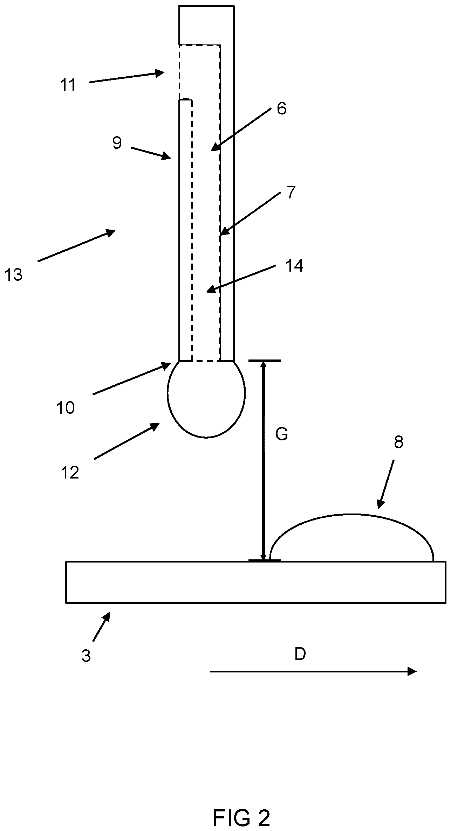

The liquid dispenser 5 has a hollow interior that defines an internal volume 14 as shown in Fig. 2. The hollow interior defining the internal volume 14 is arranged to be filled with the liquid 6 that will form a droplet 8 on the substrate 3. It may happen that, once the liquid dispenser 5 is filled but before the fluid 6 is transferred to the substrate 3, a pendant droplet 12 is formed at a flow outlet 10 of the fluid dispenser 5. This may in particular happen if the opening of the flow outlet 10 has a normal vector in a vertically downward direction. In other words, the flow outlet 10 is aimed downwards. In the case a pendant droplet 12 is formed, the total volume of the droplet 8 formed on the substrate 3 is the sum of the volume of the pendant droplet 12 and the internal volume 14 of the liquid dispenser. In the shown example, the internal volume 14 is less than 10 µl. It will however be clear to the skilled person that the internal volume can be less than 50 µl, such as 1 µl instead. Depending the application of the droplet deposition device, a smaller internal volume may be more advantageous. In the shown example, the walls 9 that form the hollow interior and define the internal volume 14 also cause a capillary force to act on the fluid 6 in the internal volume 14. The capillary force ensure that the liquid 6 does not leave the internal volume if not exposed to the adhesive forces of the second material of the substrate 3.

In the shown exemplary embodiment of Fig. 2, the liquid dispenser 5 comprises a needle 13 that has a partially hollow interior that defines the internal volume 14. In the context of the invention, a needle should be understood as an elongated shape, e.g. a relatively thin rod or bar. The skilled person however understands that the shape of the needle can be any shape and is mainly limited by common engineering limitations, e.g. the force provided by the dispensing actuator 7 or the available space. The internal volume 14 is in fluid communication with a flow inlet 11 and a flow outlet 10. The flow outlet 10 is provided at a tip of the needle 13 towards the substrate 3. For illustrative purposes, the internal volume 14 has been accentuated as an area surrounded by the dashed line inside the needle 13. A pendant droplet 12 is formed, hanging from the flow outlet 10. The total volume of the droplet 8 provided on a substrate is thus the sum of the volumes of the pendant droplet 12 and the internal volume 14.

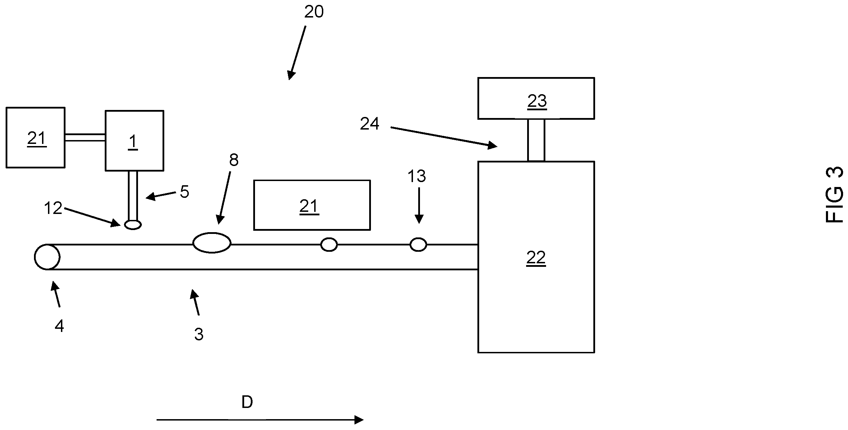

Turning to Fig. 3, a schematic side view of a droplet analysis arrangement 20 has been depicted. The droplet analysis arrangement 20 comprises a droplet deposition device 1, e.g. the droplet deposition device shown in Fig. 1. The liquid dispenser 5 of the droplet deposition device 1 is provided at one end of the substrate 3, or in the shown schematic example towards the left side. A liquid chromatography system 21 has been provided as a liquid supplier 21 upstream of, and in liquid communication with, the droplet deposition device 1 such that the liquid supplier 21, or the liquid chromatography system, is arranged to provide liquid to the liquid dispenser 5 of the droplet deposition device. Thus, the liquid analyte produced by the liquid chromatography system 21 can be provided as droplets 8 on a substrate 3 of the droplet analysis arrangement 20. In the shown example, the substrate 3 is a wire such as a metal wire. A droplet analyzer 23 has been provided downstream of the liquid dispenser 5, at an opposite end of the substrate 3. Droplets 8 provided on the substrate 3, e.g. the wire 3, are driven towards the droplet analyzer 23 by the substrate driving arrangement 4, via the wire 3, in a driving direction D, such that each droplet 8 can be analyzed. In the shown example, the droplet analyzer 23 is an isotope ratio mass spectrometer 23. In order for the isotope ratio mass spectrometer 23 to work correctly, the droplets 8 need to be first dried, e.g. using a first heater 21 such that the liquid of the sample has been evaporated and only solid material, that was suspended in the liquid, to be analyzed 13 is left on the wire. Next, the solid material is combusted by the second heater 22, and the resulting gas is transported by conduit 24, e.g. a pipe, to the isotope ratio mass spectrometer 23 for analysis.

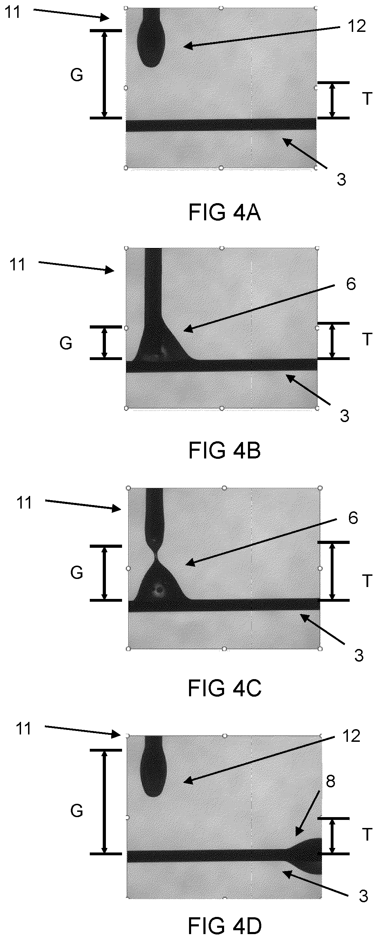

In Fig. 4A-4D photo-images show of an experiment of the transfer of the liquid 6 from a droplet deposition device, of which only a tip of a needle 11 of a liquid dispenser is shown, to a substrate. In the experiment, the substrate 3 is a wire. The needle 11 is made out of synthetic fused silica, while the wire 3 is made out of iron. In Fig. 4A, the gap distance G is larger than the transfer distance T, and thus the liquid remains on the needle 11. As can be seen, a pendulum droplet 12 is formed at the bottom of the needle 11, towards the wire 3. In Fig. 4B, the needle 11 has been brought to a distance that is less or equal than the transfer distance T, and thus the liquid 6 is transferred from the needle 11 to the wire 3. In Fig 4C the needle 11 is being brought upward again, thereby increasing the gap distance G. As can be seen, liquid is still transferred from the needle 11 to the wire 3 as liquid is present between the liquid 6 on the wire 3 and the needle 11. In Fig. 4D, the gap distance G is larger than the transfer distance T, and no liquid flows from the needle 11 to the wire 3. In the meanwhile, the wire 3 has also moved in the drive direction D and thus the droplet 8, formed by the liquid transfer, is shown in the figure to the right of the needle 11.

Many variations will be apparent to the skilled person in the art. Such variations are understood to be comprised within the scope of the invention as defined in the appended claims. For example, different sources of liquid analyte and / or different droplet analyzers may be provided.

## Claims

1. Droplet deposition device comprising:
- a substrate driving arrangement arranged to drive a substrate in a drive direction;
- a substrate provided on the substrate driving arrangement;
- a liquid dispenser arranged to provide liquid on the substrate;
- a dispensing actuator arranged to control a gap distance in a dispensing direction between the liquid dispenser and the substrate;
- wherein a transfer distance is defined as a gap distance in which the liquid provided by the liquid dispenser adheres to the substrate;
- wherein the liquid dispenser comprises a first material and the substrate comprises a second material such that when the liquid dispenser is brought at the transfer distance from the substrate, the substrate has higher adhesion forces acting on the liquid than the liquid dispenser and the liquid present in the liquid dispenser is transferred to the substrate.

2. Droplet deposition device according to claim 1, wherein the liquid dispenser comprises a hollow interior that defines an internal volume, and wherein the internal volume is less than 50 µl, preferably less than 15 µl, more preferably less than 10 µl, even more preferably less than 1 µl.

3. Droplet deposition device according to claim 1 or 2, wherein the liquid dispenser comprises a needle that has a partially hollow interior that defines the internal volume and is in liquid communication with a flow inlet and a flow outlet, wherein said flow outlet is provided at a tip of the needle towards the substrate.

4. Droplet deposition device according to any of the preceding claims, wherein the substrate is a wire having a longitudinal axis that is parallel to the drive direction, wherein the wire has a constant diameter, preferably a constant diameter of 250 µm.

5. Droplet deposition device according to any of the preceding claims, wherein the first material is silica, preferably synthetic fused silica, and / or wherein the second material is metal.

6. Droplet deposition device according to any of the preceding claims, wherein the dispensing actuator comprises a linear electromagnetic actuator.

7. Droplet deposition device according to any of the preceding claims, wherein the transfer distance is larger than zero.

8. Droplet analysis arrangement comprising:
- a droplet deposition device according to any of the preceding claims, wherein the liquid dispenser is provided at one end of the substrate;
- a liquid supplier provided upstream and in liquid communication with the droplet deposition device, wherein the liquid supplier is arranged to provide liquid to the liquid dispenser;
- a droplet analyzer provided downstream of the liquid dispenser and at an opposite end of the substrate.

9. Droplet analysis arrangement according to claim 8, wherein the liquid supplier is a liquid chromatography system.

10. Droplet analysis arrangement according to claim 8 or 9, wherein the droplet analyzer is a mass spectrometer, preferably an isotope ratio mass spectrometer.

11. Droplet analysis arrangement according to any of the claims 8-10, further comprising a first heater provided between the liquid dispenser and the droplet analyzer, wherein the heater is arranged to dry the droplet provided on the substrate such that a solid sample remains.

12. Droplet analysis arrangement according to claim 11, further comprising a second heater provided between the first heater and the droplet analyzer, wherein the second heater is arranged to combust the solid sample provided on the substrate.

13. Method of forming a droplet on a moving substrate using a droplet deposition device, comprising the steps of:
- providing a droplet deposition device, preferably the droplet deposition device according to any of the claims 1-7, comprising a liquid dispenser and a moving substrate;
- providing a liquid in or on a liquid dispenser;
- moving the liquid dispenser to a transfer distance such that the liquid transfers from the liquid dispenser to the moving substrate; and
- retracting the liquid dispenser such that a gap distance between the liquid dispenser and the moving substrate is larger than the transfer distance.

14. Method of forming a droplet on a moving wire according to claim 13, wherein the liquid dispenser comprises a first material and the substrate comprises a second material such that when the liquid dispenser is brought at the transfer distance from the substrate, the substrate has higher adhesion forces acting on the liquid than the liquid dispenser and the liquid present in the liquid dispenser is transferred to the substrate.
